# EUROPEAN PATENT APPLICATION

(11) **EP 4 757 010 A1**
(43) Date of publication of application: **10.06.2026**
(21) Application number: 25220424.3
(22) Date of filing: 03.12.2025
(51) Int. Cl.: H01M 50/103, H01M 50/15, H01M 50/184, H01M 50/188, H01M 50/55, H01M 50/553, H01M 50/562, H01M 50/566

(54) **BATTERY CELL AND CAP ASSEMBLY PROVIDED THEREIN**

(30) Priority: 09.12.2024 KR 20240181557; 29.09.2025 KR 20250141575
(71) Applicant: SK On Co., Ltd., Seoul 03161 (KR)
(72) Inventor: KWAK, Seung Ho, 34124 Daejeon (KR)
(74) Representative: Prüfer & Partner mbB Patentanwälte · Rechtsanwälte

(57) **Abstract**

A battery cell is disclosed. In some implementations, the battery cell includes: an electrode assembly; a cell case accommodating the electrode assembly; a cap plate covering an open end of the cell case and including at least one through-hole; and a terminal assembly coupled to the cap plate, wherein the terminal assembly includes a terminal electrically connected to the electrode assembly, a bracket disposed around the terminal in a lateral direction of the terminal assembly, and an insulating member disposed between the terminal and the bracket, the cap plate includes a stepped portion formed around the through-hole on a surface of the cap plate facing the electrode assembly, and at least a portion of the bracket is disposed on the stepped portion and coupled to an inner surface of the cap plate.

## Description

### TECHNICAL FIELD

The disclosure and implementations disclosed in this patent document generally relate to a battery cell (secondary battery) that is chargeable and dischargeable, and a cap assembly provided therein.

### BACKGROUND

Unlike a primary battery, a secondary battery cell has convenience in that the secondary battery cell is chargeable and dischargeable, and therefore has been in the spotlight as a power source for various mobile devices, electric vehicles, energy storage systems, and the like.

The secondary battery cell may be manufactured as a pouch-type cell or a can-type cell. The pouch-type cell has an electrode assembly accommodated inside a flexible cell case (pouch). The can-type cell has an electrode assembly accommodated inside a rigid cell case (can), and may be configured as a cylindrical cell, a prismatic cell, a coin cell, but is not limited thereto.

### SUMMARY

The present disclosure may be implemented in some embodiments to provide a battery cell including an electrode assembly, a cell case accommodating the electrode assembly, a current collector electrically connected to the electrode assembly, and a cap assembly covering an open end of the cell case. The cap assembly may include a cap plate having a through-hole, a rivet terminal that is riveted to the through-hole of the cap plate, an external terminal that is coupled to the rivet terminal and electrically connected to the current collector, an insulating member insulating the rivet terminal from the cap plate, and a seal gasket sealing between the rivet terminal and the cap plate.

A conventional cap assembly may connect an external terminal of the cap assembly and a current collector to each other using a rivet terminal, and performs sealing and insulating functions of the cap assembly using an insulating member and a seal gasket. The conventional cap assembly includes a plurality of components, thus making a structure thereof relatively complicated and manufacturing costs high.

An aspect of the present disclosure may provide a battery cell and a cap assembly provided therein, capable of simplifying the number of components and/or the structure of the cap assembly.

An aspect of the present disclosure may provide a battery cell and a cap assembly provided therein, which may prevent a terminal assembly from being separated from a cap plate.

An aspect of the present disclosure may provide a battery cell and a cap assembly provided therein, which may improve sealing performance of the cap assembly in a portion in which the terminal assembly is installed.

An aspect of the present disclosure may provide a battery cell and a cap assembly provided therein, which may facilitate manufacturing of the cap assembly.

An aspect of the present disclosure may provide a battery cell and a cap assembly provided therein, which may reduce manufacturing costs of the cap assembly.

The battery cell and the cap assembly provided therein according to the present disclosure may be widely applied to green technology fields such as electric vehicles, battery charging stations, and solar power generation, wind power generation, and the like using batteries. In addition, the battery cell and the cap assembly provided therein according to the present disclosure may be used for eco-friendly electric vehicles (EVs) and hybrid vehicles, which suppress air pollution and greenhouse gas emissions to prevent climate change.

In some embodiments of the present disclosure, a battery cell includes: an electrode assembly; a cell case accommodating the electrode assembly; a cap plate covering an open end of the cell case and including at least one through-hole; and a terminal assembly coupled to the cap plate, wherein the terminal assembly includes a terminal electrically connected to the electrode assembly, a bracket disposed around the terminal in a lateral direction of the terminal assembly, and an insulating member disposed between the terminal and the bracket, the cap plate includes a stepped portion formed around the through-hole on a surface of the cap plate facing the electrode assembly, and at least a portion of the bracket is disposed on the stepped portion and coupled to an inner surface of the cap plate, the inner surface being defined as the surface of the cap plate facing the electrode assembly.

The terminal assembly may be inserted into the through-hole in a direction from the inner side of the cell case to outer side of the cell case, and the bracket may be welded to the inner surface of the cap plate while being seated on the stepped portion.

The bracket may include a second portion extending in a first direction, a first portion extending from a first end of the second portion in the lateral direction of the terminal assembly, and a third portion spaced apart from the first portion in the first direction and extending in the lateral direction from a second end of the second portion, the first portion may extend inwardly in the lateral direction from the second portion, and the third portion may extend outward in the lateral direction from the second portion.

The third portion of the bracket may be seated on the stepped portion and welded to the inner surface of the cap plate.

The first portion and the third portion may be bent from both ends of the second portion.

An outer diameter of the third portion may be greater than an inner diameter of the through-hole.

In the lateral direction of the terminal assembly, a length by which the third portion extends from the second portion may be greater than a length by which the first portion extends from the second portion.

The insulating member may include an inner portion filling a space between an outer surface of the terminal and an inner surface of the bracket, an outer portion facing the inner portion while having the bracket interposed therebetween and covering an outer surface of the bracket, and a connecting portion connecting the inner portion to the outer portion.

The bracket may include a hole-shaped through-portion, and the insulating member may fill the through-portion.

The terminal may include a protrusion protruding outward in the lateral direction of the terminal assembly, and the insulating member may include a recessed portion accommodating the protrusion.

An outer diameter of the protrusion may be greater than a minimum inner diameter of the bracket, and when projected in a direction from the inner side of the cell case toward an outer side of the cell case, the protrusion and the bracket may partially overlap each other.

The insulating member may be insert-molded to be integrated with the terminal and the bracket.

At least one of the terminal and the bracket may include a surface-treated portion on a surface in contact with the insulating member to improve bonding strength with the insulating member.

The surface-treated portion may include a surface having irregularities or a surface having pores.

Before the terminal assembly is coupled to the cap plate, when the terminal assembly is viewed from both sides of the terminal assembly in a thickness direction of the terminal, the terminal, the insulating member, and the bracket may respectively be exposed outwardly on both the sides of the terminal in the thickness direction of the terminal.

In a state in which the terminal assembly is welded to the inner surface of the cap plate, when the terminal assembly is viewed from the inner surface of the cap plate, the terminal, the insulating member, and the bracket may respectively be exposed outwardly.

The insulating member may be in contact with only the terminal and the bracket in a space between an outer surface of the terminal and an inner surface of the bracket.

The terminal assembly may include a first terminal assembly having a first polarity and a second terminal assembly having a second polarity, and at least one of the first terminal assembly and the second terminal assembly may include a clad metal.

In some embodiments of the present disclosure, a cap assembly includes: a cap plate including at least one through-hole; and a terminal assembly coupled to the cap plate, wherein the terminal assembly includes a terminal, a bracket disposed around the terminal in a lateral direction of the terminal assembly, and an insulating member disposed between the terminal and the bracket, the cap plate includes a stepped portion formed around the through-hole on an inner surface of the cap plate, at least a portion of the bracket is disposed on the stepped portion and coupled to the inner surface of the cap plate, and the insulating member may be insert-molded to be integrated with the terminal and the bracket.

At least one of the terminal and the bracket may include a surface-treated portion on a surface in contact with the insulating member to improve bonding strength with the insulating member, and in a state in which the terminal assembly is welded to the inner surface of the cap plate, when the terminal assembly is viewed from the inner surface of the cap plate, the terminal, the insulating member, and the bracket may respectively be exposed outwardly.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of the battery cell illustrated in FIG. 1.
FIG. 3 is a perspective view of a state in which a cap assembly and an electrode assembly illustrated in FIG. 2 are coupled to each other.
FIG. 4 is a perspective view of the cap assembly illustrated in FIG. 2.
FIG. 5 is an exploded perspective view of the cap assembly illustrated in FIG. 4.
FIG. 6 is a schematic view of a coupled state of a terminal assembly.
FIG. 7 is a cross-sectional view taken along line I-I' of FIG. 6.
FIGS. 8 and 9 are cross-sectional views taken along line II-II' of FIG. 4, in which FIG. 8 illustrates a state in which the terminal assembly is coupled to a cap plate, and FIG. 9 illustrate a state in which the current collector is connected to the terminal assembly.
FIGS. 10 through 13 are cross-sectional views illustrating modified examples of the terminal assembly illustrated in FIG. 7.
FIG. 14 is an explanatory view sequentially illustrating a process in which the terminal assembly is assembled to the cap plate.
FIG. 15 is an explanatory view illustrating an assembled state of the cap assembly, the electrode assembly, and the cell case.
FIG. 16 is a perspective view of a battery device according to a preferred embodiment.

### DETAILED DESCRIPTION

Features of the present disclosure disclosed in this patent document are described by example embodiments with reference to the accompanying drawings.

The present disclosure may be implemented in some embodiments to provide a battery cell and a cap assembly provided therein.

Hereinafter, the present disclosure is described in detail with reference to the accompanying drawings. However, the embodiments described below are merely examples, and the present disclosure is not limited to these specific embodiments described by way of example.

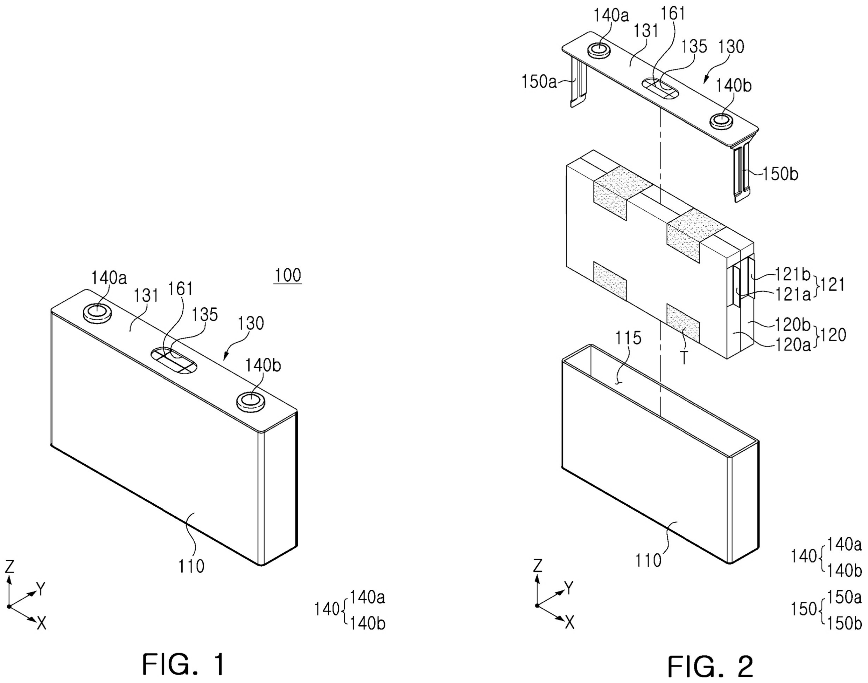

Hereinafter, a battery cell 100 according to a preferred embodiment is described with reference to FIGS. 1 through 15. Although the present disclosure is described by taking a prismatic cell as an example, a type of the battery cell 100 to which the present disclosure may be applied may be variously modified, such as a cylindrical cell or a coin cell.

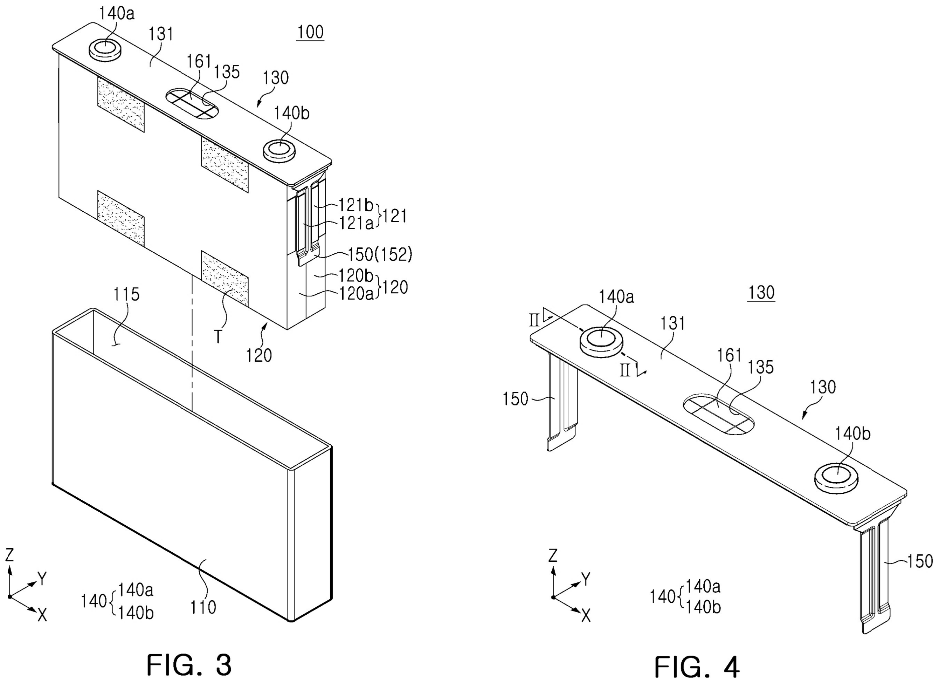

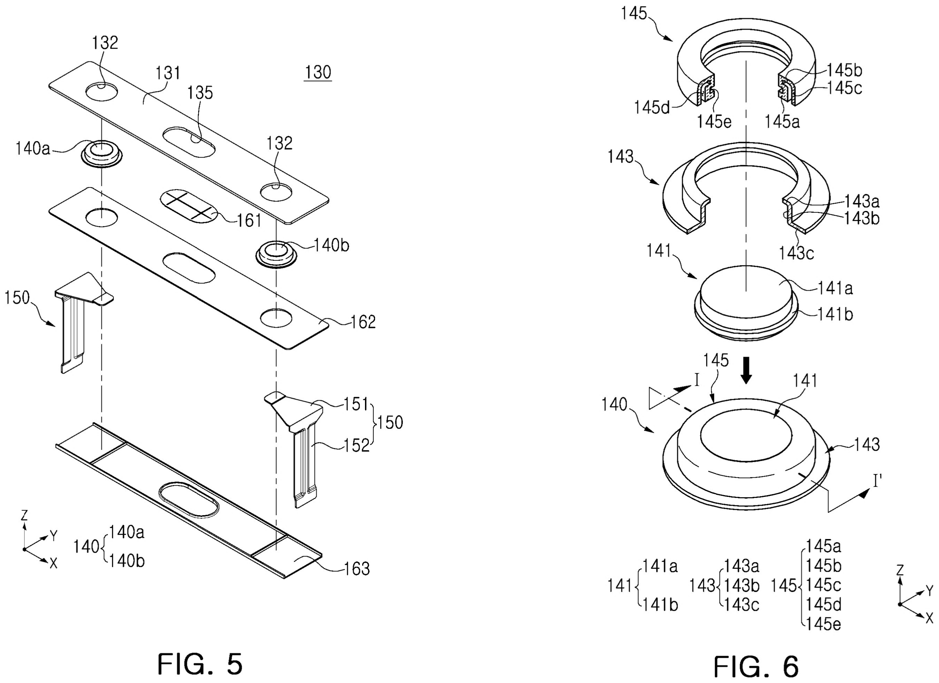

FIG. 1 is a perspective view of a battery cell 100 according to a preferred embodiment, FIG. 2 is an exploded perspective view of the battery cell 100 illustrated in FIG. 1, FIG. 3 is a perspective view of a state in which a cap assembly 130 and an electrode assembly 120 illustrated in FIG. 2 are coupled to each other, FIG. 4 is a perspective view of the cap assembly 130 illustrated in FIG. 2, and FIG. 5 is an exploded perspective view of the cap assembly 130 illustrated in FIG. 4.

Referring to FIGS. 1 through 5, the battery cell 100 according to a preferred embodiment may include an electrode assembly 120, a cell case 110 accommodating the electrode assembly 120, a cap plate 131 covering an open end of the cell case 110 and including at least one through-hole 132, and a terminal assembly 140 coupled to the cap plate 131.

The electrode assembly 120 may include a positive electrode plate, a negative electrode plate, and a separator. The positive electrode plate and the negative electrode plate may be disposed while having the separator interposed therebetween. For example, the electrode assembly 120 may have a winding-type structure in which the positive electrode plate, the negative electrode plate, and the separator are wound together. However, the electrode assembly 120 of the present disclosure is not limited to the winding-type structure. For example, the electrode assembly 120 of the present disclosure may have a stacking structure, a zigzag-folding structure, or a stack-folding structure.

The electrode assembly 120 may include an electrode tab 121. The electrode tab 121 may include a positive electrode tab connected to the positive electrode plate and a negative electrode tab connected to the negative electrode plate.

The electrode tab 121 may be disposed at a side surface of the electrode assembly 120. For example, the electrode assembly 120 may include the electrode tabs 121 respectively disposed at both side surfaces of the electrode assembly 120 in a length direction (e.g., an X-axis direction). In the present disclosure, the length direction of the electrode assembly 120 may be defined as a direction in which the longest edge among edges of the electrode assembly 120 extends, a thickness direction of the electrode assembly 120 may be defined as a direction in which the shortest edge among the edges extends, and a height direction of the electrode assembly 120 may be defined as a direction perpendicular to both the length direction and the thickness direction.

In the length direction of the electrode assembly 120, the electrode tabs 121 may respectively be disposed at both the side surfaces of the electrode assembly 120. The positive electrode tab may be disposed at one side surface of the electrode assembly 120, and the negative electrode tab may be disposed at the other side surface. The positive and negative electrode tabs may be disposed on the electrode assembly 120 to face opposite directions. However, the position of the electrode tab 121 in the present disclosure is not limited thereto. For example, the electrode tab 121 may include the positive electrode tab and the negative electrode tab respectively disposed at an upper surface of the electrode assembly 120.

The electrode assembly 120 may have a plurality of sub-electrode assemblies coupled to each other. The electrode assembly 120 may include a first sub-electrode assembly 120a including a first electrode tab 121a and a second sub-electrode assembly 120b including a second electrode tab 121b. Each of the first sub-electrode assembly 120a and the second sub-electrode assembly 120b may include a positive electrode plate, a negative electrode plate, and a separator. FIGS. 2 and 3 illustrate a case where the electrode assembly 120 includes two sub-electrode assemblies. However, the number of sub-electrode assemblies provided in the electrode assembly 120 may be variously changed to one, three, or more.

Each sub-electrode assembly 120 may include the electrode tabs 121, that is, the positive electrode tab and the negative electrode tab. The electrode tabs 121 of the electrode assembly 120 may include the first electrode tab 121a provided in the first sub-electrode assembly 120a and the second electrode tab 121b provided in the second sub-electrode assembly 120b. The first electrode tab 121a and the second electrode tab 121b may be gathered together at a central region of each sub-electrode assembly 120.

The first sub-electrode assembly 120a and the second sub-electrode assembly 120b may be coupled to each other by a fixing member T to form the electrode assembly 120. For example, the fixing member T may include a tape covering at least portions of the first sub-electrode assembly 120a and the second sub-electrode assembly 120b.

The cell case 110 may accommodate the electrode assembly 120. The cell case 110 may have an accommodation space 115 formed therein to accommodate the electrode assembly 120 and may have a shape having at least one surface open. For example, the cell case 110 may have a shape having an open upper surface.

The electrode assembly 120 or the electrode assembly 120 together with an electrolyte may be accommodated in the accommodation space 115 of the cell case 110. For example, the cell case 110 may have a hexahedral shape having open one end.

The cap assembly 130 may be coupled to the cell case 110. The cap assembly 130 may include the cap plate 131 including at least one through-hole 132 and the terminal assembly 140 coupled to the cap plate 131.

The cap assembly 130 may include the cap plate 131. The cap assembly 130 may be coupled to the cell case 110 through the cap plate 131. The cap plate 131 may be coupled to the cell case 110 and may have a plate shape. For example, the cap plate 131 may cover the open upper end of the cell case 110. The cap plate 131 may include at least one through-hole 132 to which the terminal assembly 140 is coupled.

The cap plate 131 may include a vent hole 135, and a vent cover 161 may be coupled to the vent hole 135. The vent cover 161 may be welded to the cap plate 131. The vent cover 161 may be ruptured or opened when gas occurs inside the cell case 110 and an internal pressure of the cell case 110 increases. The vent cover 161 may function to discharge gas inside the cell case 110 outward from the cell case 110 when the internal pressure of the cell case 110 increases.

The terminal assembly 140 may be disposed in the through-hole 132 of the cap plate 131. The terminal assembly 140 may be electrically connected to the electrode assembly 120. A terminal 141 of the terminal assembly 140 (see FIG. 6) may be electrically connected to the electrode tab 121 of the electrode assembly 120 through a current collector 150.

The terminal assembly 140 may be inserted into the through-hole 132 in a direction from the inner side the cell case 110 toward outer side of the cell case 110. Referring to FIG. 5, the terminal assembly 140 may be coupled to the cap plate 131 while being inserted into the through-hole 132 in a direction from the lower side toward upper side of the cap plate 131. The terminal assembly 140 may be welded to a lower surface of the cap plate 131. For example, the terminal assembly 140 may be laser-welded to the lower surface of the cap plate 131.

The terminal assembly 140 may include a first terminal assembly 140a having a first polarity and a second terminal assembly 140b having a second polarity. The first polarity and the second polarity may be different from each other. For example, the first polarity may be a positive polarity, and the second polarity may be a negative polarity. In this case, the first terminal assembly 140a may include a positive terminal, and the second terminal assembly 140b may include a negative terminal. The positive terminal may be electrically connected to the positive electrode tab of the electrode assembly 120, and the negative terminal may be electrically connected to the negative electrode tab of the electrode assembly 120.

The current collector 150 may electrically connect the electrode tab 121 of the electrode assembly 120 and the terminal 141 (see FIG. 6) of the terminal assembly 140. The current collector 150 may include a terminal connection part 151 electrically connected to the terminal 141 and a tab connection part 152 electrically connected to the electrode tab 121.

When the electrode tabs 121 are positioned at both the side surfaces of the electrode assembly 120, the current collector 150 may include a first current collector 150a connected to the electrode tab 121 positioned at one side surface of the electrode assembly 120 and a second current collector 150b connected to the electrode tab 121 positioned at the other side surface of the electrode assembly 120.

When the electrode tabs 121 are positioned at both the side surfaces of the electrode assembly 120, and the terminal 141 is positioned at an upper side of the electrode assembly 120, the current collector 150 may have a bent shape. For example, the terminal connection part 151 and the tab connection part 152 may have shapes bent with respect to each other. The tab connection part 152 may be bent approximately 90 degrees from the terminal connection part 151. The current collector 150 may have an approximately L-shaped cross-sectional shape to electrically connect the terminal 141 to the electrode tabs 121 respectively disposed at both the sides of the electrode assembly 120.

The first electrode tab 121a of the first sub-electrode assembly 120a and the second electrode tab 121b of the second sub-electrode assembly 120b may respectively be coupled to the tab connection part 152 of the current collector 150. The current collector 150 may electrically connect the first electrode tab 121a and the second electrode tab 121b to the terminal 141.

The cap plate 131, the terminal assembly 140, and the current collector 150 may be coupled to one another to be provided as the cap assembly 130. The current collector 150 may be welded to the electrode assembly 120 in a state in which the current collector 150 is coupled to the terminal assembly 140. That is, the current collector 150 may be coupled to the electrode assembly 120 in a state in which the current collector 150 is provided as the cap assembly 130. The cap assembly 130 may be coupled to the electrode assembly 120 through the current collector 150.

However, the cap assembly 130 of the present disclosure is not limited to a configuration including the current collector 150. The cap assembly 130 may or may not include the current collector 150 based on the position of the electrode tab 121 of the electrode assembly and/or the position of the terminal assembly 140. For example, when the current collector 150 is first coupled to the electrode tabs 121 of the electrode assembly 120, the cap assembly 130 may not include the current collector 150. Conversely, when the current collector 150 is first coupled to the terminal assembly 140 and then coupled to the electrode tabs 121 of the electrode assembly 120, the cap assembly 130 may include the current collector 150.

The cap assembly 130 may further include a plurality of insulators. The cap assembly 130 may include a first insulator 162 electrically insulating the cap plate 131 and the current collector 150 from each other. A second insulator 163 electrically insulating the electrode assembly 120 and the current collector 150 from each other, and insulating the electrode assembly 120 and the cap plate 131 from each other may be disposed at a lower portion of the current collector 150 or the cap plate 131.

In the present disclosure, although a structure is illustrated in which one end of the cell case 110 is open, one cap plate 131 is coupled to the cell case 110, and the first terminal assembly 140a and the second terminal assembly 140b are installed on one cap plate 131, the arrangement structure of the cell case 110, the cap plate 131, and the terminal assembly 140 is not limited thereto. For example, the cell case 110 may have open both ends, the cap plates 131 respectively coupled to both ends, and at least one of the first terminal assembly 140a and the second terminal assembly 140b disposed on each of the cap plates 131.

The present disclosure illustrates a configuration in which the electrode tabs 121 are respectively positioned at both the side surfaces of the electrode assembly 120 in the length direction (e.g., an X-axis direction), and the terminal assemblies 140 having different polarities are disposed at an upper side of the electrode assembly 120. However, the arrangement structure of the electrode tabs 121 and the terminal assemblies 140 is not limited thereto. For example, the present disclosure may also be applied to a structure in which the electrode tabs 121 are positioned at both the side surfaces of the electrode assembly 120 in the length direction, and the terminal assemblies 140 are respectively disposed at both sides of the electrode assembly 120 in the length direction. Furthermore, the present disclosure may also be applied to a structure in which the electrode tabs 121 and the terminal assemblies 140 having different polarities are disposed at the upper side of the electrode assembly 120.

In addition, the current collector 150 may be modified into various shapes based on the positions where the electrode tabs 121 of the electrode assembly 120 and the terminal assemblies 140 are disposed. For example, although FIG. 5 illustrates the current collector 150 as having a bent L-shaped structure, when the electrode tabs 121 of the electrode assembly 120 and the terminal assemblies 140 are disposed to face each other, the current collector 150 may have a shape that is not bent.

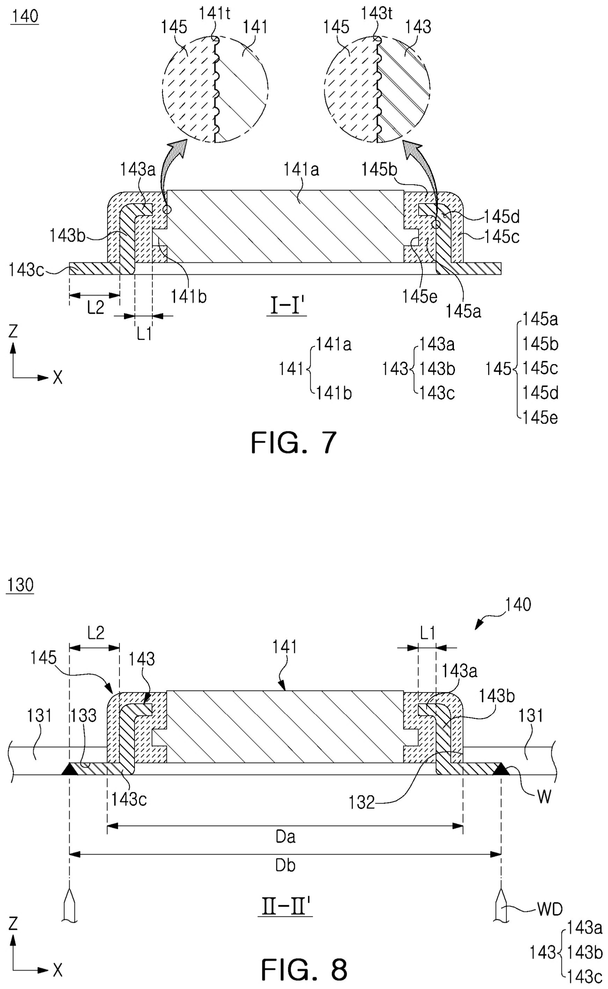

FIG. 6 is a schematic view of a coupled state of the terminal assembly 140, and FIG. 7 is a cross-sectional view taken along line I-I' of FIG. 6. The terminal assembly 140 is described with reference to FIGS. 3, 5, 6, and 7 together.

The terminal assembly 140 may include the terminal 141 electrically connected to the electrode assembly 120, a bracket 143 disposed around the terminal 141 in a lateral direction of the terminal assembly 140, and an insulating member 145 disposed between the terminal 141 and the bracket 143.

In a state illustrated in FIG. 6, the terminal 141 may have a columnar shape extending in a vertical direction (e.g., a Z-axis direction), and the lateral direction of the terminal assembly 140 may indicate a horizontal direction perpendicular to the vertical direction. In the present disclosure, the lateral direction may include the X-axis direction or a Y-axis direction.

The terminal 141 may be electrically connected to the electrode assembly 120. The terminal 141 may be electrically connected to the electrode tab 121 of the electrode assembly 120 through the current collector 150. In a state illustrated in FIG. 6, the terminal 141 may have a columnar shape extending in the vertical direction (e.g., the Z-axis direction). The terminal 141 may include a circular, elliptical, or rectangular cross-section in the horizontal direction.

The bracket 143 may be disposed to surround a side surface of the terminal 141 along a circumferential side surface of the terminal assembly 140. The bracket 143 may be disposed around the circumference of the terminal 141 in the lateral direction. The bracket 143 may be disposed to be spaced apart from the terminal 141. In the state illustrated in FIG. 6, the lateral direction of the terminal 141 may indicate the horizontal direction perpendicular to the vertical direction (e.g., the Z-axis direction). In the present disclosure, the lateral direction of the terminal 141 may include the X-axis direction or the Y-axis direction. A space formed to accommodate the terminal 141 may be formed inside the bracket 143, and a through-space extending in the vertical direction may be formed inside the bracket 143.

The insulating member 145 may be disposed between the terminal 141 and the bracket 143. The insulating member 145 may be formed by injection molding a polymer raw material into a space between the terminal 141 and the bracket 143.

The insulating member 145 may be insert-molded to be integrated with the terminal 141 and the bracket 143. For example, after the terminal 141 and the bracket 143 are seated in a mold for insert molding, a polymer resin, but is not limited thereto, may be injected into the mold for insert molding, thereby integrating the terminal 141, the bracket 143, and the insulating member 145. The terminal 141 and the bracket 143 may be integrally formed by means of the insulating member 145. The insert molding may include insert injection molding. The terminal 141, the bracket 143, and the insulating member 145 may form the terminal assembly 140 by insert molding, thereby facilitating manufacturing of the terminal assembly 140.

The insulating member 145 may include a crystalline resin among polymer resins. When the insulating member 145 is provided as the crystalline resin, bonding strength of the terminal assembly 140 may be improved.

The crystalline resin may include one or more selected from the group consisting of polyphenylene sulfide (PPS), polybutylene terephthalate (PBT), polyether ether ketone (PEEK), polyamide (PA), polyethylene terephthalate (PET), polyoxymethylene (POM), polypropylene (PP), polyethylene (PE), and polyimide (PI).

The bracket 143 may include a second portion 143b extending in a first direction, a first portion 143a extending from a first end of the second portion 143b in the lateral direction of the terminal assembly 140, and a third portion 143c spaced apart from the first portion 143a in the first direction and extending in the lateral direction from a second end of the second portion 143b. Here, the first direction (Z) may be defined as a direction in which the second portion 143b of the bracket 143 extends vertically, and may include not only the Z-axis direction illustrated in FIGS. 6 and 7 but also a direction having a predetermined inclination with respect to the Z-axis direction. That is, the first direction is not limited to the vertical direction.

The first portion 143a may extend inwardly in the lateral direction from the second portion 143b, and the third portion 143c may extend outward in the lateral direction from the second portion 143b. Here, the inward direction with respect to the lateral direction may be defined as a direction toward the center of the terminal 141, and the outward direction with respect to the lateral direction may be defined as a direction away from the terminal 141. The first portion 143a may extend inward in the lateral direction from an upper end of the second portion 143b, and the third portion 143c may extend outward in the lateral direction from a lower end of the second portion 143b.

When the bracket 143 has both ends of the second portion 143b that extend in different directions, the bracket 143 may be easily manufactured by press working.

The third portion 143c of the bracket 143 may extend outward in the lateral direction from the second portion 143b, and the bracket 143 may not include a portion extending inward in the lateral direction from the lower end of the second portion 143b. In this case, the insulating member 145 may easily fill a space between the second portion 143b and the terminal 141, and molding of the insulating member 145 may be smoothly performed.

The first portion 143a and the third portion 143c may be bent from both ends of the second portion 143b. The bracket 143 may include two bending lines. The bracket 143 may have a bent portion between the first portion 143a and the second portion 143b, and a bent portion between the second portion 143b and the third portion 143c.

The bracket 143 may be bent in different directions based on the two bending lines, and the bracket 143 may thus be easily manufactured by press working.

In the lateral direction of the terminal assembly 140, a length L2 by which the third portion 143c extends from the second portion 143b may be greater than a length L1 by which the first portion 143a extends from the second portion 143b.

The third portion 143c may extend outward in the lateral direction by the second length L2 from the lower end of the second portion 143b, and the first portion 143a may extend inward in the lateral direction by the first length L1 from the upper end of the second portion 143b. When the second length L2 is greater than the first length L1, a contact area between the third portion 143c and the cap plate 131 (see FIG. 5) may increase, thereby lengthening a leak path of an electrolyte and preventing leakage of the electrolyte.

The insulating member 145 may include an inner portion 145a filling a space between an outer surface of the terminal 141 and an inner surface of the bracket 143, an outer portion 145c facing the inner portion 145a while having the bracket 143 interposed therebetween and covering an outer surface of the bracket 143, and a connecting portion 145b connecting the inner portion 145a to the outer portion 145c.

The inner portion 145a may be formed by filling the space between the terminal 141 and the bracket 143, and insulate the terminal 141 and the bracket 143 from each other. The inner portion 145a may insulate the outer surface of the terminal 141 and the second portion 143b of the bracket 143 from each other. The inner portion 145a may function to insulate the terminal 141 and the cap plate 131 that is coupled to the bracket 143 from each other. The outer portion 145c and the connecting portion 145b may cover the outer surface of the bracket 143, thereby more reliably ensuring insulation between the terminal 141 and the bracket 143.

An accommodating portion 145d for accommodating the bracket 143 may be formed between the inner portion 145a, the connecting portion 145b, and the outer portion 145c. The accommodating portion 145d may be a space covered by the inner portion 145a, the connecting portion 145b, and the outer portion 145c.

The terminal 141 may include a protrusion 141b protruding outward in the lateral direction of the terminal assembly 140, and the insulating member 145 may include a recessed portion 145e accommodating the protrusion 141b.

The terminal 141 may include a body 141a extending in the vertical direction and the protrusion 141b protruding outward in the lateral direction from an outer surface of the body 141a. When the terminal 141 includes the protrusion 141b, the insulating member 145 disposed between the bracket 143 and the protrusion 141b of the terminal 141 may include the recessed portion 145e accommodating the protrusion 141b. The protrusion 141b of the terminal 141 and the recessed portion 145e of the insulating member 145 may increase a contact area between the terminal 141 and the insulating member 145, thereby improving bonding strength between the terminal 141 and the insulating member 145. When the protrusion 141b is formed on the terminal 141, the leak path of the electrolyte may be extended, thereby preventing leakage of the electrolyte.

An upper surface of the terminal 141 in the terminal assembly 140 may protrude outward (upward) beyond an upper surface of the insulating member 145. Accordingly, an electrical connection component such as a bus bar may be easily mounted on the upper surface of the terminal 141.

At least one of the terminal 141 and the bracket 143 may include a surface-treated portion 141t or 143t on a surface in contact with the insulating member 145 to improve bonding strength with the insulating member 145.

The terminal 141 and the bracket 143 may each be made of a metal material. At least one of the terminal 141 and the bracket 143 may undergo surface treatment before undergoing insert molding. At least one of the terminal 141 and the bracket 143 may include the surface-treated portions 141t or 143t formed by the surface treatment. The surface-treated portions 141t and 143t may include the first surface-treated portion 141t formed on a surface of the terminal 141 and the second surface-treated portion 143t formed on a surface of the bracket 143. The surface-treated portions 141t and 143t may respectively be formed on the surfaces of the terminal 141 and the bracket 143.

The first surface-treated portion 141t formed on the surface of the terminal 141 may be provided on at least a portion of the surface of the terminal 141 in contact with the insulating member 145. For example, the first surface-treated portion 141t may be provided on at least a portion of the outer surface of the body 141a, at least a portion of a surface of the protrusion 141b, or at least a portion of both the outer surface of the body 141a and the surface of the protrusion 141b. In addition, the first surface-treated portion 141t may be provided on an entire surface of the terminal 141.

The second surface-treated portion 143t formed on the surface of the bracket 143 may be provided on at least a portion of the surface of the bracket 143 in contact with the insulating member 145. For example, the second surface-treated portion 143t may be provided on at least a portion of surfaces of the first portion 143a, the second portion 143b, and the third portion 143c in contact with the insulating member 145. In addition, the second surface-treated portion 143t may be provided on an entire surface of the bracket 143.

When the surface-treated portions 141t and 143t are respectively provided on the surfaces of the terminal 141 and the bracket 143, the insulating member 145 may be bonded to the first surface-treated portion 141t of the terminal 141 and the second surface-treated portion 143t of the bracket 143, thereby improving the bonding strength of the terminal assembly 140. Alternatively, the surface-treated portion 141t or 143t may be formed on either the surface of the terminal 141 or the surface of the bracket 143, and even in this case, the bonding strength of the terminal assembly 140 may be improved.

The surface treatment may increase a contact area between the terminal 141 and the insulating member 145 and/or between the bracket 143 and the insulating member 145, and may enhance bonding strength between the terminal 141 and the insulating member 145 and/or between the bracket 143 and the insulating member 145.

The terminal 141 and the bracket 143 may be integrated to the insulating member 145 by insert injection molding after the surface treatment. In this case, bonding strength of the insulating member 145 between the terminal 141 and the bracket 143 may be increased, and the space between the terminal 141 and the bracket 143 may be sealed by the insulating member 145. That is, the surface treatment performed on the terminal 141 and the bracket 143 may prevent leakage occurring at interfaces between the terminal 141 and the insulating member 145 and between the bracket 143 and the insulating member 145, and improve a bonding strength between the interfaces. Accordingly, even when a gasket for sealing is not installed in the cap assembly 130, sealing performance of the cap assembly 130 may be ensured. However, the present disclosure does not exclude use of the gasket.

The surface treatment may be performed by press working, shot blasting, laser processing, chemical etching, an oxide film formation process, but is not limited thereto. However, the surface treatment is not limited thereto, and may use various surface treatment methods capable of enhancing the bonding strength between the metal terminal 141 and/or the metal bracket 143 and the insulating member 145.

For example, the terminal 141 and/or the bracket 143 may undergo the surface treatment including chromium (Cr) film treatment followed by applying a polyvinyl alcohol (PVA) binder.

Through a chromium (Cr) film treatment, a film layer of chromium hydroxide (Cr(OH)₃) or chromium oxide (Cr₂O₃) may be formed on the surface of the terminal 141 and/or the bracket 143. Here, the chromium film layer may increase chemical activity of the metal surface, thereby improving interfacial bonding strength with the insert-molded insulating member 145.

In addition, the insulating member 145 may include polypropylene grafted with maleic anhydride (PP-g-MA), and may be produced by blending polyphenylene sulfide (PPS) and glass fiber-reinforced polymer (GF polymer).

PP-g-MA may strengthen adhesion through chemical interaction with the chromium (Cr) film layer formed on the metal surface.

Accordingly, the insulating member 145 including PP-g-MA may be insert-molded onto the terminal 141 and/or the bracket 143 having the chromium (Cr) film layer or a chromium oxide film, thereby significantly improving chemical and mechanical bonding strength between the metal surface and the resin.

Here, a process of forming the chromium (Cr) film layer (Cr(OH)₃) or the chromium oxide film (Cr₂O₃) may be performed in the following order: an electrolytic degreasing process, a rinsing process, a chromium film formation process by immersion treatment including chromium components, a rinsing process, a post-treatment immersion process using non-chromium (non-Cr) components, a rinsing process, and a drying process.

Here, the post-treatment immersion process may further include a step of forming a surface coating layer by applying the PVA binder (e.g., a polymer-based organic coating agent). The PVA binder coating may ensure corrosion resistance and improve durability.

Furthermore, the terminal 141 and/or the bracket 143 may be surface-treated using 3-aminopropyltriethoxysilane (APTES), which is a silane coupling agent, to introduce an amine group (-CH2)3-NH2 on the surface.

The insulating member 145 may be prepared by inserting and molding polyphenylene sulfide (PPS) and a glass fiber-reinforced polymer (GF polymer) provided with a carboxyl group (-COOH).

In this way, an amide bonding (-CO-NH-) may be formed between the amine group of the terminal 141 and/or the bracket 143 and the carboxyl group of the insulating member 145, thereby enhancing the interfacial bonding strength between the two components.

Here, a process of forming the amine group on the surface of the terminal 141 and/or the bracket 143 using 3-aminopropyltriethoxysilane (APTES) may be performed in the following order: an electrolytic degreasing process, a rinsing process, an acid treatment process using a nitric acid (HNO₃) solution or a sodium hydroxide (NaOH) solution, an immersion treatment process using a 1-2% solution of 3-aminopropyltriethoxysilane (APTES) (e.g., an ethanol-water mixed solution), a rinsing process, and a drying process.

In addition, the terminal 141 and/or the bracket 143 may be surface-treated using 3-glycidoxypropyltrimethoxysilane (e.g., γ-glycidoxypropyltrimethoxysilane (GPTMS)) as a silane coupling agent to introduce an epoxy group (e.g., -C-O-C-) onto the surface.

The insulating member 145 may be insert-molded after introducing the carboxyl group (-COOH) into polyphenylene sulfide (PPS) and a glass fiber-reinforced polymer (GF polymer). In this manner, the epoxy group of the terminal 141 and/or the bracket 143 and the carboxyl group of the insulating member 145 may be bonded (e.g., forming -COO-CH₂ - CH(OH)-), thereby improving interfacial bonding strength.

Here, a process of forming the epoxy group on the surface of the terminal 141 and/or the bracket 143 using 3-glycidoxypropyltrimethoxysilane (e.g., γ-glycidoxypropyltrimethoxysilane (GPTMS)) as the silane coupling agent may include the following order: an electrolytic degreasing process, a rinsing process, an acid treatment process using a nitric acid (HNO₃) solution or a sodium hydroxide (NaOH) solution, an immersion treatment process using GPTMS with an ethanol-water mixed solution, a rinsing process, and a drying process.

The surface-treated portion 141t or 143t may include a surface having irregularities (uneven surface) or a surface having pores. The surface having irregularities or pores may be formed by depressions generated on the surface of the terminal 141 or the bracket 143 during surface treatment. The surface having irregularities (uneven surface) may include fine irregular portions and/or fine dimples. The pores may include nano-sized or micro-sized fine pores formed on the surface of the terminal 141 or the bracket 143 by surface treatment. The embodiment according to the present disclosure may integrate the terminal 141, the bracket 143, and the insulating member 145 by insert molding, thereby simplifying the structure of the terminal assembly 140. Accordingly, the embodiment may reduce a manufacturing cost of the cap assembly 130 compared with a conventional terminal connection structure using rivets, and simplify an assembly process. In addition, when at least one of the terminal 141 and the bracket 143 has the surface-treated portion 141t or 143t, the sealing performance between the terminal 141 and the bracket 143 may be ensured even without any gasket.

Before the terminal assembly 140 is coupled to the cap plate 131, when the terminal assembly 140 is viewed from both sides of the terminal assembly 140 in the thickness direction of the terminal 141, the terminal 141, the insulating member 145, and the bracket 143 may respectively be exposed outwardly on both the sides of the terminal 141 in the thickness direction of the terminal 141.

For example, when the terminal assembly 140 illustrated in FIG. 7 is viewed from the upper side toward lower side of the terminal 141 in the thickness direction, the terminal 141, the connecting portion 145b of the insulating member 145, and the third portion 143c of the bracket 143 may be exposed outward. Conversely, when the terminal assembly 140 is viewed from the lower side toward upper side of the terminal 141 in the thickness direction, the terminal 141, the inner portion 145a of the insulating member 145, and the third portion 143c of the bracket 143 may be exposed outward. In this case, unlike in the prior art where a gasket is separately disposed for sealing, sealing between the terminal 141 and the bracket 143 may be ensured even without disposing a gasket.

The insulating member 145 may be in contact with only the terminal 141 and the bracket 143 in the space between the outer surface of the terminal 141 and the inner surface of the bracket 143. For example, no gasket for sealing may be disposed in the space between the outer surface of the terminal 141 and the inner surface of the bracket 143. According to a preferred embodiment, no gasket is disposed, thereby reducing the number of components of the terminal assembly 140 and simplifying a structure thereof. Furthermore, manufacturing of the cap assembly 130 may be facilitated and its manufacturing cost may be reduced.

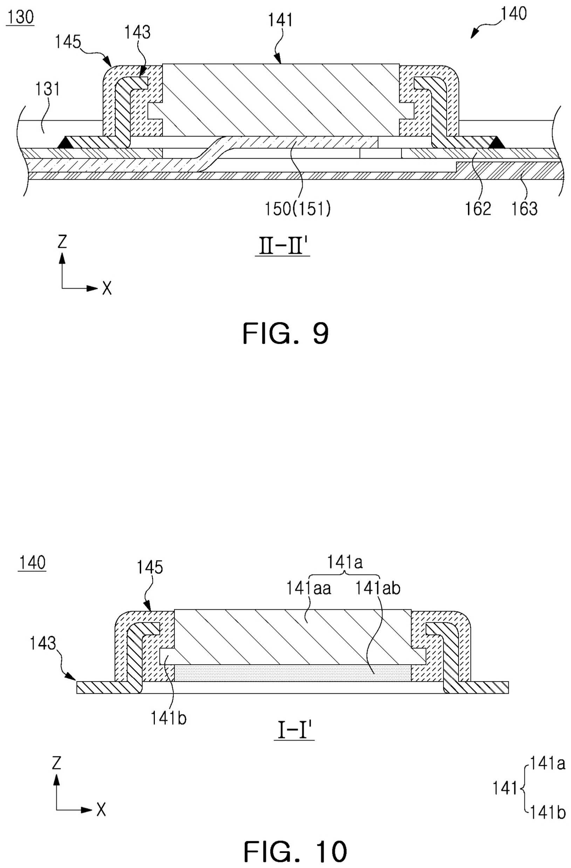

FIGS. 8 and 9 are cross-sectional views taken along line II-II' of FIG. 4. FIG. 8 illustrates a state in which the terminal assembly 140 is coupled to the cap plate 131, and FIG. 9 illustrates a state in which the current collector 150 is connected to the terminal assembly 140.

Referring to FIGS. 8 and 9, the cap assembly 130 may include the cap plate 131 and the terminal assembly 140.

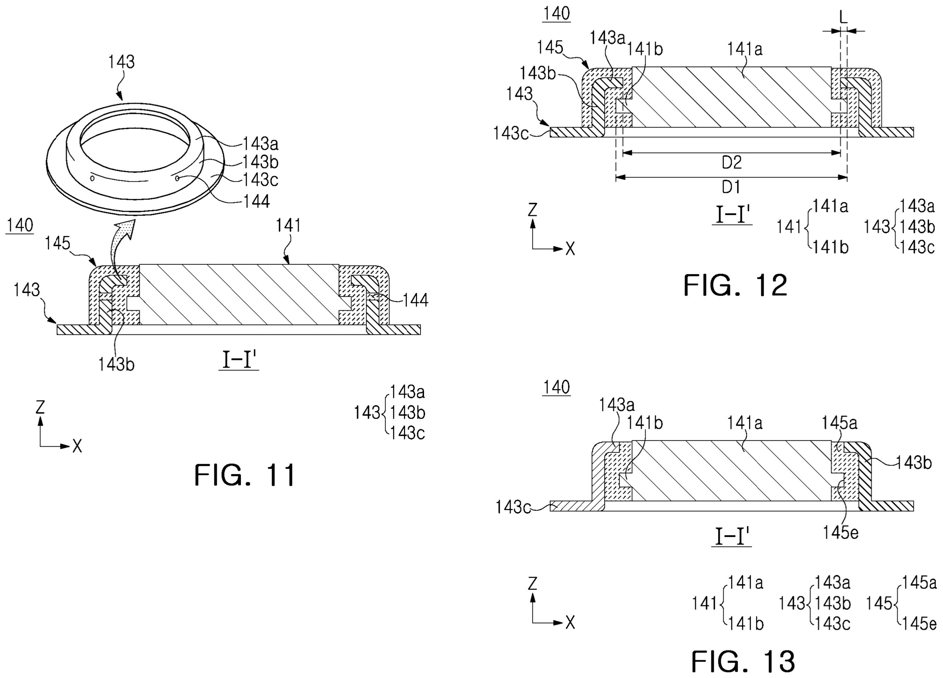

The cap plate 131 may include a stepped portion 133 formed around the through-hole 132 on an inner surface of the cap plate 131 facing the electrode assembly 120 (see FIG. 12). The terminal assembly 140 may include the terminal 141, the bracket 143, and the insulating member 145.

At least a portion of the bracket 143 included in the terminal assembly 140 may be disposed on the stepped portion 133 and coupled to the inner surface of the cap plate 131. Here, the inner surface of the cap plate 131 may be defined as a surface of the cap plate 131 facing the electrode assembly 120.

The terminal assembly 140 may be inserted into the through-hole 132 in a direction from the inner side toward outer side of the cell case 110 (see FIG. 2). That is, the terminal assembly 140 may be inserted into the through-hole 132 through the lower surface (or the inner surface) of the cap plate 131, and the terminal 141 of the terminal assembly 140 may be exposed outward from the cell case 110 through an upper surface (or an outer surface) of the cap plate 131. In this case, the third portion 143c of the bracket 143 may be in contact with the stepped portion 133 formed on the inner surface of the cap plate 131.

The bracket 143 may be welded to the inner surface of the cap plate 131 while being seated on the stepped portion 133. A welding device (WD) may perform welding from the inner surface toward outer surface of the cap plate 131. The welding device (WD) may include a laser welder irradiating a laser. A welded part W may be formed at a portion in which an edge of the bracket 143 is in contact with the inner surface of the cap plate 131.

The third portion 143c of the bracket 143 may be seated on the stepped portion 133 and welded to the inner surface of the cap plate 131. The cap plate 131 may be welded to the third portion 143c of the bracket 143, and the cap plate 131 and the third portion 143c may be coupled to each other through the welded part W. The inner surface of the cap plate 131 and the third portion 143c of the bracket 143 may be laser-welded.

The welded part W may include a welding line formed along a circumference of the bracket 143. When the terminal 141 has a circular cross-section, the welded part W may have a circular shape.

An outer diameter Db of the third portion 143c included in the bracket 143 may be greater than an inner diameter Da of the through-hole 132. The third portion 143c of the bracket 143 may be installed on the stepped portion 133 on the inner surface of the cap plate 131 and coupled to the cap plate 131 while being in contact with the stepped portion 133 formed around the through-hole 132.

The third portion 143c of the bracket 143 may be disposed on the stepped portion 133 on the inner surface of the cap plate 131, and the cap plate 131 may thus restrict the terminal assembly 140 from deforming or moving outward. Therefore, when the internal pressure of the cell case 110 increases, separation of the terminal assembly 140 from the cap plate 131 may be prevented. In addition, the cap plate 131 restricts the movement or deformation of the terminal assembly 140, thereby preventing deterioration or failure of sealing between the terminal assembly 140 and the cap plate 131.

The third portion 143c may extend outward in the lateral direction by the second length L2 from the lower end of the second portion 143b, and the first portion 143a may extend inward in the lateral direction by the first length L1 from the upper end of the second portion 143b. When the second length L2 is greater than the first length L1, the contact area between the third portion 143c and the cap plate 131 (see FIG. 5) may increase, thereby lengthening the leak path of the electrolyte and preventing leakage of the electrolyte.

In a state in which the terminal assembly 140 is welded to the inner surface of the cap plate 131, when the terminal assembly 140 is viewed from the inner surface of the cap plate 131, the terminal 141, the insulating member 145, and the bracket 143 may respectively be exposed outwardly.

For example, referring to the terminal assembly 140 and the cap plate 131 illustrated in FIG. 9, when the terminal assembly 140 is viewed from the inner surface of the cap plate 131, the terminal 141, the insulating member 145, and the third portion 143c of the bracket 143 may respectively be exposed outwardly. In this case, unlike the prior art where a gasket is disposed, sealing between the terminal 141 and the bracket 143 may be ensured even without a gasket. According to a preferred embodiment, no gasket is disposed, thereby reducing the number of components of the terminal assembly 140 and simplifying the structure thereof. Furthermore, manufacturing of the cap assembly 130 may be facilitated and its manufacturing cost may be reduced.

Referring to FIG. 9, in a state in which the terminal assembly 140 is welded to the cap plate 131, the first insulator 162 may cover the inner surface of the cap plate 131. The first insulator 162 may electrically insulate the cap plate 131 and the current collector 150 from each other. Subsequently, the terminal connection part 151 of the current collector 150 and the terminal 141 may be electrically connected to each other. The current collector 150 and the terminal 141 may be welded to each other by laser welding or the like. After the current collector 150 and the terminal 141 are coupled to each other, the second insulator 163 may be disposed below the current collector 150 or the cap plate 131. The second insulator 163 may electrically insulate the electrode assembly 120 (see FIG. 2) and the current collector 150 from each other, and the electrode assembly 120 and the cap plate 131 from each other.

FIGS. 10 through 13 are cross-sectional views illustrating modified examples of the terminal assembly 140 illustrated in FIG. 7. The terminal assemblies 140 illustrated in FIGS. 10 through 13 may also be applied to the battery cell 100 illustrated in FIGS. 1 through 5.

As described with reference to FIGS. 1 through 5, the terminal assembly 140 may include the first terminal assembly 140a having the first polarity and the second terminal assembly 140b having the second polarity.

Referring to FIG. 10, at least one of the first terminal assembly 140a and the second terminal assembly 140b may include a clad metal.

For example, a negative terminal 141 may include a clad metal. The body 141a of the terminal 141 may include a first region 141aa exposed outward from the cap plate 131 and a second region 141ab coupled to the current collector 150. The first region 141aa may be made of a material including aluminum, and the second region 141ab may be made of a material including copper.

The negative current collector 150 (see FIG. 5) may be made of a material including copper. Accordingly, when the second region 141ab is made of copper, welding defects may be reduced when the current collector 150 and the second region 141ab are welded to each other. Furthermore, copper has a lower electrical resistance than aluminum. Accordingly, when the negative terminal 141 includes a material including copper in a partial region, heat generation may be reduced compared to a case where the entire negative terminal 141 is made of aluminum or an aluminum alloy, thereby reducing energy loss. Applying a clad metal including both a copper-based (copper or copper alloy) material and an aluminum-based (aluminum or aluminum alloy) material to the terminal 141 may prevent or delay galvanic corrosion of the terminal 141.

Referring to FIG. 11, the bracket 143 may include a hole-shaped through-portion 144, and the insulating member 145 may fill the through-portion 144. The through-portion 144 may be formed in the second portion 143b of the bracket 143, and its position or number may be variously changed. When the through-portion 144 is formed in the bracket 143, the insulating member 145 may fill the through-portion 144, thereby increasing bonding strength between the insulating member 145 and the bracket 143.

Referring to FIG. 12, the terminal 141 may include the protrusion 141b protruding outward in the lateral direction. An outer diameter D1 of the protrusion 141b may be greater than a minimum inner diameter D2 of the bracket 143. The minimum inner diameter D2 of the bracket 143 may correspond to an inner diameter of the first portion 143a.

In this case, when projected in the direction from the inner side of the cell case 110 toward an outer side of the cell case 110, the protrusion 141b and the bracket 143 may partially overlap each other. For example, the protrusion 141b of the terminal 141 may have a size overlapping the first portion 143a of the bracket 143 in the vertical direction. The protrusion 141b and the bracket 143 may overlap each other by an overlap length L.

When the internal pressure of the cell case 110 (see FIG. 2) increases and a force is applied to the terminal 141 in an outward direction, the first portion 143a of the bracket 143 may function as a stopper for restricting movement of the protrusion 141b of the terminal 141. Therefore, separation of the terminal 141 from the insulating member 145 may be prevented.

Compared with the terminal assembly 140 illustrated in FIG. 7, the terminal assembly 140 illustrated in FIG. 13 differs in a shape of the insulating member 145. That is, in a preferred embodiment illustrated in FIG. 13, the insulating member 145 may include the inner portion 145a filling the space between the outer surface of the terminal 141 and the inner surface of the bracket 143, and may not cover the outer surface of the bracket 143. Except for the shape of the insulating member 145, the remaining configuration may be the same as that of the terminal assembly 140 illustrated in FIG. 7.

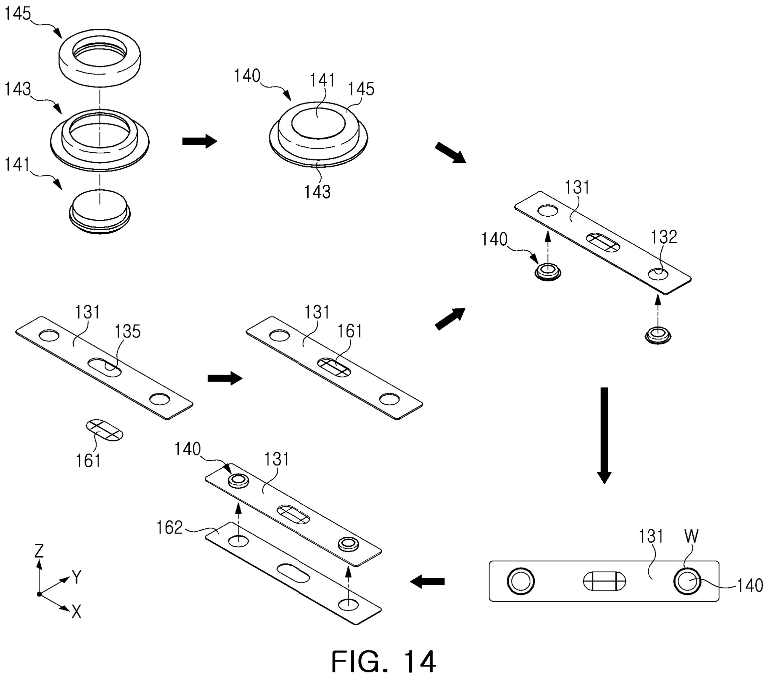

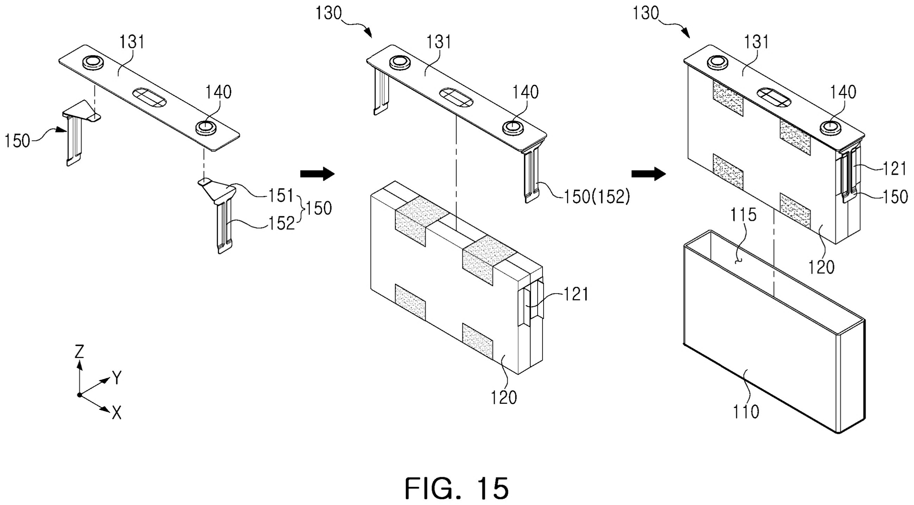

Hereinafter, an overall assembly process of the battery cell 100 is described with reference to FIGS. 14 and 15. FIGS. 14 and 15 illustrate examples of the battery cell 100 illustrated in FIGS. 1 through 9. The overall assembly process of the battery cell 100 may be variously modified based on the arrangement and structures of the electrode assembly 120, the current collector 150, the cap plate 131, and the terminal assembly 140.

FIG. 14 is an explanatory view sequentially illustrating a process in which the terminal assembly 140 is assembled to the cap plate 131.

Referring to FIG. 14, the terminal 141, the bracket 143, and the insulating member 145 may be insert-molded and provided as the terminal assembly 140. The cap plate 131 may include the vent hole 135, and the vent cover 161 may be coupled to the vent hole 135. The vent cover 161 may be welded to the vent hole 135.

Subsequently, the terminal assembly 140 may be assembled into the through-hole 132 of the cap plate 131. The terminal assembly 140 may be inserted into the through-hole 132 through the inner surface (or the lower surface) of the cap plate 131, and the terminal 141 of the terminal assembly 140 may be exposed outward from the cell case 110 through the outer surface (or the upper surface) of the cap plate 131.

The terminal assembly 140 may be welded to the inner surface of the cap plate 131 while being seated on the inner surface of the cap plate 131. The welded part W may be formed at a portion in which an edge of the terminal assembly 140 is in contact with the inner surface of the cap plate 131. The welded part W may be formed along a circumference of the terminal assembly 140.

After the terminal assembly 140 is welded to the cap plate 131, the first insulator 162 for insulation may be disposed on the inner surface of the cap plate 131.

FIG. 15 is an explanatory view illustrating an assembled state of the cap assembly 130, the electrode assembly 120, and the cell case 110.

Referring to FIG. 15, while the terminal assembly 140 is installed on the cap plate 131, the current collector 150 and the terminal assembly 140 may be electrically connected to each other. For example, the current collector 150 may include the terminal connection part 151 electrically connected to the terminal assembly 140 and the tab connection part 152 electrically connected to the electrode assembly 120. The terminal connection part 151 of the current collector 150 may be welded to the terminal assembly 140. The cap plate 131, the terminal assembly 140, and the current collector 150 may be provided as the cap assembly 130.

Subsequently, the electrode tab 121 of the electrode assembly 120 may be electrically connected to the current collector 150. The electrode tab 121 may be welded to the tab connection part 152 of the current collector 150.

Finally, the electrode assembly 120 and the cap assembly 130 may be disposed in the accommodation space 115 of the cell case 110 in a coupled state, and the cell case 110 and the cap plate 131 may be joined to each other by welding.

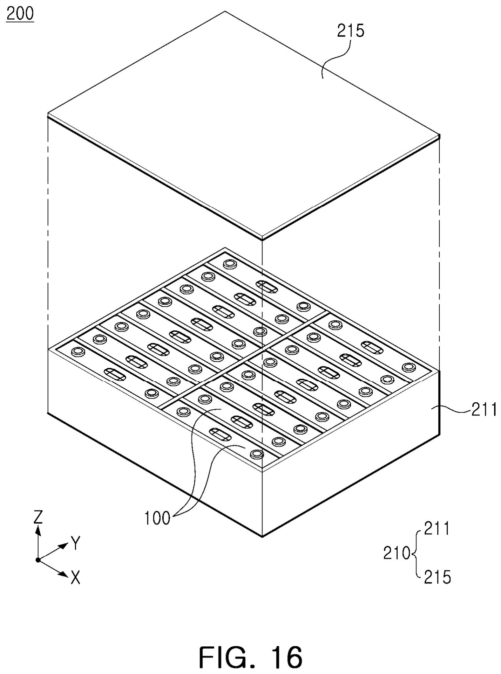

FIG. 16 is a perspective view of a battery device 200 according to a preferred embodiment.

Referring to FIG. 16, the battery device 200 according to a preferred embodiment may include the plurality of battery cells 100 and a housing 210 accommodating the plurality of battery cells 100.

At least one of the plurality of battery cells 100 provided in the battery device 200 may be applied as at least one of the battery cells 100 described with reference to FIGS. 1 through 15. The descriptions provided with reference to FIGS. 1 through 15 may also apply to the battery cells 100 provided in the battery device 200 illustrated in FIG. 16.

When the battery device 200 of the present disclosure includes the plurality of battery cells 100, a specific type of the battery cell is not limited. For example, the battery device 200 of the present disclosure may be defined to include all of a battery module, a battery pack, an energy storage system, and the like.

The housing 210 may provide a space for accommodating the plurality of battery cells 100. The housing 210 may include a housing body 211 having a space for accommodating the plurality of battery cells 100, and a housing cover 215 covering an upper side of the plurality of battery cells 100.

As set forth above, according to a preferred embodiment of the present disclosure, the number of components and/or the structure of the cap assembly may be simplified.

According to a preferred embodiment of the present disclosure, the separation of the terminal assembly from the cap plate may be prevented.

According to a preferred embodiment of the present disclosure, the sealing performance of the cap assembly between the cap plate and the terminal assembly and/or inside the terminal assembly may be improved.

According to a preferred embodiment of the present disclosure, the manufacturing of the cap assembly may be facilitated.

According to a preferred embodiment of the present disclosure, the manufacturing cost of the cap assembly may be reduced.

Only specific examples of implementations of certain embodiments are described. Variations, improvements and enhancements of the disclosed embodiments and other embodiments may be made based on the disclosure of this patent document.

## Claims

1. A battery cell comprising:
an electrode assembly;
a cell case accommodating the electrode assembly;
a cap plate covering an open end of the cell case and including at least one through-hole; and
a terminal assembly coupled to the cap plate,
wherein the terminal assembly includes a terminal electrically connected to the electrode assembly, a bracket disposed around the terminal in a lateral direction of the terminal assembly, and an insulating member disposed between the terminal and the bracket,
the cap plate includes a stepped portion formed around the through-hole on a surface of the cap plate facing the electrode assembly, and
at least a portion of the bracket is disposed on the stepped portion and coupled to an inner surface of the cap plate, the inner surface being defined as the surface of the cap plate facing the electrode assembly.

2. The battery cell of claim 1, wherein the terminal assembly is inserted into the through-hole in a direction from the inner side of the cell case to outer side of the cell case, and
the bracket is welded to the inner surface of the cap plate while being seated on the stepped portion.

3. The battery cell of claim 1 or claim 2, wherein the bracket includes a second portion extending in a first direction, a first portion extending from a first end of the second portion in the lateral direction of the terminal assembly, and a third portion spaced apart from the first portion in the first direction and extending in the lateral direction from a second end of the second portion,
the first portion extends inward in the lateral direction from the second portion, and
the third portion extends outward in the lateral direction from the second portion.

4. The battery cell of claim 3, wherein (a) the third portion of the bracket is seated on the stepped portion and welded to the inner surface of the cap plate; and/or
(b) the first portion and the third portion are bent from both ends of the second portion; and/or
(c) an outer diameter of the third portion is greater than an inner diameter of the through-hole; and/or
(d) in the lateral direction of the terminal assembly, a length by which the third portion extends from the second portion is greater than a length by which the first portion extends from the second portion.

5. The battery cell of any one of claims 1 to 4, wherein the insulating member includes
an inner portion filling a space between an outer surface of the terminal and an inner surface of the bracket,
an outer portion facing the inner portion while having the bracket interposed therebetween and covering an outer surface of the bracket, and
a connecting portion connecting the inner portion to the outer portion.

6. The battery cell of any one of claims 1 to 5, wherein the bracket includes a hole-shaped through-portion, and
the insulating member fills the through-portion.

7. The battery cell of any one of claims 1 to 6, wherein (a) the terminal includes a protrusion protruding outward in the lateral direction of the terminal assembly, and the insulating member includes a recessed portion accommodating the protrusion; and/or
(b) an outer diameter of the protrusion is greater than a minimum inner diameter of the bracket, and when projected in a direction from the inner side of the cell case toward an outer side of the cell case, the protrusion and the bracket partially overlap each other.

8. The battery cell of any one of claims 1 to 7, wherein the insulating member is insert-molded to be integrated with the terminal and the bracket.

9. The battery cell of claim 8, wherein at least one of the terminal and the bracket includes a surface-treated portion on a surface in contact with the insulating member to improve coupling strength with the insulating member,
preferably wherein the surface-treated portion includes a surface having irregularities or a surface having pores.

10. The battery cell of claim 8, wherein before the terminal assembly is coupled to the cap plate, when the terminal assembly is viewed from both sides of the terminal assembly in a thickness direction of the terminal, the terminal, the insulating member, and the bracket are each exposed outward on both the sides of the terminal in the thickness direction of the terminal.

11. The battery cell of claim 8, wherein in a state in which the terminal assembly is welded to the inner surface of the cap plate, when the terminal assembly is viewed from the inner surface of the cap plate, the terminal, the insulating member, and the bracket are each exposed outward.

12. The battery cell of claim 8, wherein the insulating member is in contact with only the terminal and the bracket in a space between an outer surface of the terminal and an inner surface of the bracket.

13. The battery cell of any one of claims 1 to 12, wherein the terminal assembly includes a first terminal assembly having a first polarity and a second terminal assembly having a second polarity, and
at least one of the first terminal assembly and the second terminal assembly includes a clad metal.

14. A cap assembly comprising:
a cap plate including at least one through-hole; and
a terminal assembly coupled to the cap plate,
wherein the terminal assembly includes a terminal, a bracket disposed around the terminal in a lateral direction of the terminal assembly, and an insulating member disposed between the terminal and the bracket,
the cap plate includes a stepped portion formed around the through-hole on an inner surface of the cap plate,
at least a portion of the bracket is disposed on the stepped portion and coupled to the inner surface of the cap plate, and
the insulating member is insert-molded to be integrated with the terminal and the bracket.

15. The cap assembly of claim 14, wherein at least one of the terminal and the bracket includes a surface-treated portion on a surface in contact with the insulating member to improve coupling strength with the insulating member, and
in a state in which the terminal assembly is welded to the inner surface of the cap plate, when the terminal assembly is viewed from the inner surface of the cap plate, the terminal, the insulating member, and the bracket are each exposed outward.
